(19) Europäisches Patentamt
European Patent Office
Office européen des brevets

(11) EP 1 298 748 A2

(12) # EUROPEAN PATENT APPLICATION

(43) Date of publication:
02.04.2003 Bulletin 2003/14

(51) Int Cl.[7]: **H01M 8/02**

(21) Application number: **02021386.4**

(22) Date of filing: **24.09.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **26.09.2001 JP 2001293612**

(71) Applicant: **DAINIPPON INK AND CHEMICALS, INC.**
**Itabashi-ku Tokyo (JP)**

(72) Inventors:
- **Harada, Tetsuya**
  **Izumi-shi, Osaka (JP)**
- **Mori, Kunio**
  **Ichihara-shi, Chiba-ken (JP)**
- **Kato, Toshiya**
  **Sakai-shi, Osaka (JP)**
- **Hamada, Kenichi**
  **Izumiotsu-shi, Osaka (JP)**
- **Kamei, Masayuki**
  **Sakai-shi, Osaka (JP)**

(74) Representative: **Albrecht, Thomas, Dr. et al**
**Kraus & Weisert,**
**Thomas-Wimmer-Ring 15**
**80539 München (DE)**

(54) **Bipolar plate for fuel cell, method for manufacturing the bipolar plate, and fuel cell using the bipolar plate**

(57) A bipolar plate for a fuel cell includes a conductive material, a novolac type phenol resin or a phenol dicyclopentadiene resin, and a compound having at least two ethylenically unsaturated double bonds. The conductive material is dispersed in an addition cross-linking reaction cured composition formed by the reaction of the novolac type phenol resin or the phenol dicyclopentadiene resin with the compound having at least two ethylenically unsaturated double bonds. Also, a method for manufacturing a bipolar plate for a fuel cell is provided, including the steps of mixing a conductive material, a novolac type phenol resin or a phenol dicyclopentadiene resin, and a compound having at least two ethylenically unsaturated double bonds, and heating and forming a resulting mixture into the shape of a bipolar plate.

EP 1 298 748 A2

## Description

BACKGROUND OF THE INVENTION

1. Field of the Invention

The present invention relates to a bipolar plate for fuel cells, a method for manufacturing the bipolar plate, and a fuel cell using the bipolar plate. More specifically, the present invention relates to a bipolar plate for fuel cells, which has excellent conductivity, gas impermeability, and mechanical strength. The bipolar plate has excellent dimensional accuracy having no generation of warping, cracking, blister, etc., and the internal state thereof is also excellent. The present invention further relates to a simple and reliable method for manufacturing the bipolar plate for a fuel cell, and a fuel cell having high performance using the bipolar plate.

2. Background Art

A "fuel cell" may be defined as a device which generates electric and thermal energy by utilizing an electrochemical reaction between a fuel and an oxidant. In general, the fuel cell has a basic structure of a single cell unit, in which two electrodes are provided so as to be separated from each other via an electrolyte are held by two "bipolar plates" provided with flow field of fuel, such as hydrogen gas, or of an oxidant, such as oxygen gas or air. When a high output is required, a plurality of the single cells are stacked in series to form a "stack structure", and electricity is extracted using current collecting plates provided at both ends of the stack.

There are various types of fuel cells depending on the kinds of electrolytes, fuel, oxidants, etc., employed. Among them, a solid polymer type fuel cell which uses a solid polymer electrolyte membrane for the electrolyte, hydrogen gas for the fuel, and air for the oxidant, and a direct methanol type fuel cell which extracts hydrogen directly from methanol in the fuel cell and uses it as a fuel, is capable of efficiently generating electric power at a relatively low operation temperature of less than 200°C.

It is required for the bipolar plates used for these fuel cells to have characteristics, such as gas impermeability, in order to stably supply fuel to flow field generated on one side of bipolar plate and oxidant to that of the other side of bipolar plate, and conductivity to improve power generation efficiency, in addition to durability under fuel cell operating environments.

As a method for producing a bipolar plate for the fuel cell which requires the above-mentioned characteristics, for instance, a binding agent may be added to a carbonaceous powder and the mixture is molded into blocks after being heated and kneaded. The resulting graphitized material obtained by calcinating the molded substance is formed into the shape of a bipolar plate by machining. However, if this method is used, the bipolar plates obtained become porous due to the generation of volatile matter during the calcinations-graphitizing process, and problems are generated for the gas impermeability of the bipolar plates. In order to solve the above-mentioned problems of the calcinated-graphitized material, although a method in which a thermosetting resin is filled in pores of the graphitized material and is cured to obtain a bipolar plate base material is proposed in Japanese Unexamined Patent Application, First Publication, No. Hei 8-222241, the processes of this method are complicated and require a graphitizing process, a molding process, a filling and a curing process of the resin, and a machining process to form as a shape of the bipolar plate, etc., and hence, the method is problematic from the viewpoints of mass production and economical efficiency.

Also, a method in which a mixture of a graphite powder having a certain particle size and a thermosetting resin is molded and cured to produce a bipolar plate, has been proposed in Japanese Examined Patent Application, Second Publication, No. Sho 64-340 and Japanese Unexamined Patent Application, First Publication, No. Hei 10-334927. However, when a thermosetting resin, such as a general purpose phenol resin specifically mentioned in the publications, is used, bubbles and holes are generated inside or at surfaces of the product due to condensed water or gas generated during the reaction. Accordingly, the product becomes heterogeneous and problems, such as warping and blister, are caused which makes the product unsuitable for use in the bipolar plates for a fuel cell.

Note that although a resin composition including a novolac type phenol resin and divinylbenzene as a curing agent is disclosed in U.S. Patent No. 4,200,706, an electroconductive material is not disclosed therein, and an application of such a resin composition to a bipolar plate for a fuel cell is not suggested.

SUMMARY OF THE INVENTION

Accordingly, an object of the present invention, in consideration of the above, is to provide a bipolar plate for a fuel cell, having excellent gas impermeability, conductivity, and durability. Also, another object of the present invention is to provide a method for manufacturing the bipolar plate for a fuel cell, which is excellent in gas impermeability, conductivity, and durability, and that is excellent in moldability and mass productivity. Furthermore, yet another object

of the present invention is to provide a fuel cell with high performance using the bipolar plate having excellent gas impermeability, conductivity, and durability.

The inventors of the present invention, after diligent studies to achieve the above objects, have found that a bipolar plate for a fuel cell having excellent gas impermeability, conductivity, and durability can be obtained, and a method for producing a bipolar plate for a fuel cell having excellent moldability and mass productivity can be provided by a bipolar plate for a fuel cell including an addition cross-linking reaction cured composition formed by the reaction of a novolac type phenol resin with a compound having at least two ethylenically unsaturated double bonds. Furthermore, the inventors of the present invention have found that a fuel cell with high performance can be provided by using the above bipolar plate having excellent gas impermeability, conductivity, and durability, and have thereby completed the present invention.

That is, the present invention provides a bipolar plate for a fuel cell, including a conductive material (A); a novolac type phenol resin or a phenol dicyclopentadiene resin (B); and a compound having at least two ethylenically unsaturated double bonds (C), wherein the conductive material (A) is dispersed in an addition cross-linking reaction cured composition formed by the reaction of the novolac type phenol resin or the phenol dicyclopentadiene resin (B) with the compound having at least two ethylenically unsaturated double bonds (C). Also, the present invention provides a method for manufacturing a bipolar plate for a fuel cell, including the steps of mixing a conductive material (A), a novolac type phenol resin or a phenol dicyclopentadiene resin (B), and a compound having at least two ethylenically unsaturated double bonds (C), and heating and molding a resulting mixture into a shape of a bipolar plate. Moreover, the present invention provides a fuel cell, including an electrolyte membrane, a pair of electrodes, and the above-mentioned bipolar plate for a fuel cell, wherein the pair of electrodes are placed on both sides of electrolyte membrane, and the electrolyte membrane is put between a pair of bipolar plates.

As mentioned above, the bipolar plate for a fuel cell of the present invention has excellent gas impermeability, conductivity, and mechanical strength. Also, the bipolar plate has an excellent dimensional accuracy having no generation of warping, cracking, blister, etc., and an internal state thereof is excellent. Moreover, according to the method for manufacturing the bipolar plate for a fuel cell of the present invention, a bipolar plate, which is excellent in gas impermeability, conductivity, and mechanical strength, that is also excellent in the dimensional accuracy having no generation of warping, cracking, blister, etc., and internally, can be manufactured using simple processes in an economical and reliable manner. Furthermore, the fuel cell according to the present invention has high performance using the bipolar plate having excellent gas impermeability, conductivity, and durability.

## BRIEF DESCRIPTION OF THE DRAWINGS

Some of the features and advantages of the invention having been described, and others will become apparent from the detailed description which follows and from the accompanying drawings, in which:

FIG. 1 is a perspective view of a bipolar plate for a fuel cell according to an embodiment of the present invention;
FIG. 2 is a perspective view of a structure of a fuel cell according to another embodiment of the present invention; and
FIG. 3 is a perspective view of a stack structure of fuel cell according to yet another embodiment of the present invention.

## DESCRIPTION OF THE PREFERRED EMBODIMENTS

The invention summarized above and defined by the enumerated claims may be better understood by referring to the following detailed description, which should be read with reference to the accompanying drawings. This detailed description of particular preferred embodiments, set out below to enable one to build and use one particular implementation of the invention, is not intended to limit the enumerated claims, but to serve as a particular example of the invention.

A bipolar plate for a fuel cell according to an embodiment of the present invention includes a conductive material (A) which is dispersed in an addition cross-linking reaction cured compound including a novolac type phenol resin or a phenol dicyclopentadiene resin (B) and a compound (C) having at least two ethylenically unsaturated double bonds.

The conductive material (A) used in the present invention is not particularly limited, and examples of the conductive material (A) include, for instance, a carbon material, a metal, a metallic compound, and a conductive polymer. Among them, use of the carbon material is preferable from the viewpoint of its durability.

Examples of the above-mentioned carbon material include, for instance, artificial graphite, natural graphite, glassy carbon, carbon black, acetylene black, ketjen black, and expanded graphite which can be obtained by chemically treating the graphite. Among these carbon materials, use of the artificial graphite, natural graphite, and expanded

graphite is preferable from the viewpoint of achieving high conductivity with small amounts thereof. Also, the shapes of the graphite materials are not limited and can be of any shape, such as that of a fiber, powder, foil, scale, needle, or the shape may be spherical or amorphous.

Among the above-mentioned shapes of the carbon material, examples of the fiber shaped carbon material include, for instance, depending on the kinds of raw fiber materials, a pitch type, PAN type, and rayon type carbon fibers. Among these, use of carbon fibers, which are produced by a carbonizing process and a graphitizing process at a high temperature of 2,000°C or more, is preferable from the viewpoint of the performance in conductivity. The length and shape of the carbon fibers are not particularly limited; however, the length of the fiber is preferably 25 mm or less by taking into account the kneading affinity with a resin. Examples of the carbon fiber having the corresponding length include filaments, chopped strands, and milled fibers.

Also, examples of the above-mentioned metal and metallic compounds include, for instance, aluminum, zinc, iron, copper, nickel, silver, gold, stainless steel, palladium, titanium and borides thereof, borides of zirconium, and borides of hafnium. The shape of the metal and the metal compounds can be any shape, such as that of a powder, fiber, or foil, or may be amorphous.

The above-mentioned conductive materials can be used alone or in combination. Also, a non-conductive material can be used together with the above-mentioned conductive material, and a composite material made of the conductive material and a non-conductive material can be also used, as long as it does not degrade the effects of the present invention.

Examples of the composite material made of the conductive material and the non-conductive material include, for instance, glass fibers surface treated by metal, glass beads surface treated by metal, and inorganic fillers surface treated by metal.

The amount of the above conductive material (A) is preferably 50-95% by weight, and more preferably 70-90% by weight, with respect to a mixture including the conductive material (A), a novolac type phenol resin or a phenol dicyclopentadiene resin (B), which will be described later, and a compound having at least two ethylenically unsaturated double bonds (C), which will be also described later. If the amount of the conductive material (A) is within the above-mentioned range, the fluidity and the moldability of the mixture will be excellent, and a superior conductivity required by a fuel cell can be obtained.

The phenol resin used in the embodiment of the present invention is a novolac type phenol resin or a phenol dicyclopentadiene resin (B). Examples of the novolac type phenol resin include, for instance, a novolac type phenol resin formed by a reaction of a phenol type compound with a formaldehyde supplying substance, and a phenol resin prepared by a reaction of a xylene resin with a phenol type compound.

The phenol dicyclopentadiene resin (B), which is used in the embodiment of the present invention has a structure expressed by the following general formula (1).

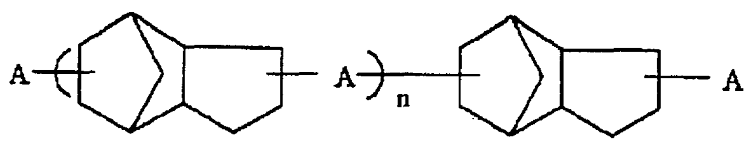 (1)

(where A indicates a residue of a phenol type compound, and n indicates an integer between zero and 10).

Also, according to the present invention, it is possible to modify and use the above-mentioned phenol resin. Moreover, the resin can be used alone or in a mixture of two or more.

Among the above-mentioned novolac type phenol resin prepared by the reaction of a phenol type compound with a formaldehyde supplying substance, novolac type phenol resins whose ratio of the number of methylene groups bonded to the ortho-positions, with respect to the phenolic hydroxyl group, of aromatic rings contained in one molecule of the phenol resin to the number of those bonded to the para-positions (hereinafter referred to as the O/P ratio) is 3 or more, or novolac type phenol resins having ethylenically unsaturated double bonds in a molecule, are particularly preferable.

The O/P ratio of the novolac type phenol resin is defined as follows.

In the novolac type phenol resin, methylene groups are bonded to the aromatic rings contained in a molecule in three patterns, namely, the methylene groups are bonded to the ortho-positions, the ortho-position and the para-position, or para-positions, with respect of the hydroxyl group, of aromatic rings contained in one molecule.

Accordingly, the O/P ratio is expressed by the ratio of a total of the number of methylene groups bonded to the ortho-positions and a half of the number of methylene groups bonded to the ortho-position and the para-position, with respect to the hydroxyl group, to a total of the number of methylene groups bonded to the para-positions and a

half of the number of methylene groups bonded to the ortho-position and the para-position, of the aromatic rings. The O/P ratio can be calculated in accordance with the formula [1] shown below.

$$\text{O/P ratio} = [(a + b / 2)] / [(c + b / 2)] \qquad [1]$$

In the above formula [1], a, b, and c indicate the following:

a: the number of methylene groups bonded to the ortho-positions;
b: the number of methylene groups bonded to the ortho-position and the para-position; and
c: the number of methylene groups bonded to the para-positions.

The number of methylene groups bonded to aromatic rings contained in one molecule of the novolac type phenol resin used in the embodiment of the present invention and the bonding pattern thereof can be measured by using a conventional method which measures the absorption position and the strength thereof with reference to a standard whose number and the pattern of the methylene groups have been identified and the absorption position and the strength thereof have been determined. Examples of the above conventional methods include a method using, for instance, an infrared absorption spectrum, a nuclear magnetic resonance, or a gel permeation chromatography.
When a novolac type phenol resin having the O/P ratio of 3 or more, or a phenol dicyclopentadiene resin, is used, the solubility to the compound (C) having at least two ethylenically unsaturated double bonds, which will be described later, is improved, and a cured compound having little variation in quality, such as mechanical strength, can be obtained.
Also, when a novolac type phenol resin having ethylenically unsaturated double bonds in a molecule is used, its reactivity to the compound (C) having at least two ethylenically unsaturated double bonds, which will be described later, is increased, and the curing rate is enhanced.
When two or more of the novolac type phenol resins having different O/P ratio are used as a mixture, they may be formulated to have an O/P ratio of 3 or more.
It is preferable that a novolac type phenol resin have an O/P ratio as large as possible, and especially, one having an O/P ratio between 4 and 7 is preferable. As examples of such a novolac type phenol resin, any of what are generally called "high ortho-novolac type phenol resins", which are commercially available, can be used.
Hereinafter, a novolac type phenol resin having an O/P ratio of 3 or more is called a high ortho-novolac type phenol resin.
The novolac type phenol resins prepared by the reaction of a phenol type compound with a formaldehyde supplying substance include not only one having a structure in which the phenol type compounds are bonded only by the methylene groups but also one having both the methylene groups and the dimethylene ether groups, and are bonded by the two.
The number average molecular weight of the novolac type phenol resin or the phenol dicyclopentadiene resin (B) is not particularly limited; however, it is preferable that the range of the number average molecular weight thereof be within the range of 200-2,000, and more preferably within the range of 300-3,000. If the number average molecular weight is within the range of 200-2,000, the solubility to the compound having at least two ethylenically unsaturated double bonds (C) is improved.
The method for preparing the novolac type phenol resin is not particularly limited, and any conventionally known methods can be employed according to the embodiment of the present invention. That is, the novolac type phenol resin can be easily prepared by, for instance, subjecting a formaldehyde supplying substance and a phenol type compound to an addition-condensation reaction in the presence of an acid catalyst (molar ratio: formaldehyde supplying substance / phenol type compound = 0.7-1.0).
Also, the high ortho-novolac type phenol resin can be obtained via an addition-condensation reaction in the presence of a weak acidic catalyst, such as zinc acetate, which will be described later.
Moreover, the phenol dicyclopentadiene resin can be easily prepared by, for instance, subjecting dicyclopentadiene and a phenol type compound to a reaction in the presence of an acid catalyst (molar ratio: dicyclopentadiene / phenol type compound = 1 : 0.05 - 1 : 15.0). The phenol dicyclopentadiene thus obtained can be directly used for a reaction. However, it is preferable to evaporate and remove unreacted phenol type compound and dicyclopentadiene in terms of improving the heat resistance of the cured compound.
According to the embodiment of the present invention, any conventionally known phenol type compounds can be utilized, and examples of such phenol type compounds include, for instance, phenols, bisphenols, such as bisphenol F, bisphenol A, and bisphenol AF, alkyl substituted phenols, such as cresol, xylenol, and p-tertiary butylphenol, halogenophenols, such as bromophenol, aromatic hydrocarbons having at least two phenolic hydroxyl groups, such as resorcin, and naphthols, such as 1-naphthol, 2-naphthol, 1,6-dihydroxy naphthalene, and 2,7-dihydroxy naphthalene. These phenol type compounds can be used alone or in a mixture of two or more.

As a raw material for the above-mentioned high ortho-novolac type phenol resin, a compound having no substituents at the ortho-, and para- positions, such as phenol, m-cresol, and 3,5-xylenol, is used alone or in a mixture of two or more.

It is possible to use, if necessary, furfural, urea, melamine, acetoguanamine, benzoguanamine, etc., together with the phenol type compound.

According to the embodiment of the present invention, any known formaldehyde supplying substance can be used, and examples of such substance include a formaldehyde aqueous solution, and paraformaldehyde.

The catalysts used for preparing the novolac type phenol resins are not particularly limited. Examples of such catalyst include, for instance, oxalic acid, hydrochloric acid, sulfuric acid, p-toluene sulfonic acid, phosphoric acid, metallic salts, such as zinc acetate, and manganese borate, and metallic oxides, such as lead oxide, and zinc oxide. Use of the metallic salts, such as zinc acetate, and manganese borate, and the metallic oxides, such as lead oxide, and zinc oxide, is preferable to obtain the above-mentioned high ortho-novolac type phenol resin.

Also, examples of the catalysts used for preparing the phenol dicyclopentadiene resin include, for instance, Lewis acid catalysts, such as aluminum chloride, boron trifluoride, zinc chloride, sulfuric acid, and titanium chloride.

Moreover, the above-mentioned novolac type phenol resin having ethylenically unsaturated double bonds may be obtained by using a phenol type compound having at least one ethylenically unsaturated double bonds together with an ordinary phenol type compound having no ethylenically unsaturated double bonds.

The above-mentioned phenol type compound having at least one ethylenically unsaturated double bond is not particularly limited, and examples thereof include, for instance, (o-, m-, or p-) allylphenol, (o-, m-, or p-) vinylphenol, (o-, m-, or p-) propenyl phenol, (o-, m-, or p-) isopropenyl phenol, allylresorcinol, diallylresorcinol, allylcatechol, diallylcatechol, allylhydroquinone, diallylhydroquinone, and allylpyrogallol. Among these, use of allylphenol is preferable.

The reaction of the above-mentioned phenol type compound with a formaldehyde supplying substance, etc., and the reaction of the phenol type compound with dicyclopentadiene can be carried out in the presence of an organic solvent. On the other hand, it is possible to add an organic solvent to a reaction product which has been obtained in the presence of no organic solvents.

In order to obtain a high ortho-novolac type phenol resin by the above-mentioned former reaction, it is preferable to carry out the reaction in the presence of an organic solvent.

The organic solvents that can be used in accordance with the embodiment of the present invention are not particularly limited, and examples of such organic solvents include, for instance, aromatic hydrocarbons, such as toluene, and xylene.

Also, the above reaction can be carried out in a batch or in a tubular reaction vessel having static mixing elements.

The novolac type phenol resin or phenol dicyclopentadiene resin (B) used in the embodiment of the present invention is preferably one containing the least amount of residue, the metallic salts and/or metallic oxides used as the catalyst in the reaction, in particular, it is preferable to use one having 0.005 ppm or less of an amount of the metallic salts and/or metallic oxides. If such metallic compounds, etc., remain in the resulting products, they may consume a curing catalyst, which will be described later, and thus not preferable. Any conventionally known methods can be used for decreasing the remaining amount of the metallic salts and/or metallic oxides; however, a method of repeat washing with water is normally most easy, and hence preferable.

The compound having at least two ethylenically unsaturated double bonds (C) used in the embodiment of the present invention is not particularly limited, and non-limiting examples thereof include, for instance, divinylbenzene, alkyldivinylbenzene and halogen substitutes thereof; and compounds having at least one phenolic hydroxyl group and at least three ethylenically unsaturated double bonds, such as triallylphenol, trivinylphenol, tripropenylphenol, triisopropenylphenol, triallylresorcinol, and trivinylresorcinol. Among the above-mentioned compounds, from the viewpoints of reactivity and workability, divinylbenzene, and compounds having at least one and phenolic hydroxyl group, and at least three ethylenically unsaturated double bonds are preferable, and divinylbenzene is particularly preferable. Among the above-mentioned compounds having at least one phenolic hydroxyl group and at least three ethylenically unsaturated double bonds, triallylphenol is particularly preferable.

The above-mentioned compound can be used alone or in a mixture of two or more as the compound (C) having at least two ethylenically unsaturated double bonds. Also, the compound (C) may also include, in addition to the above-mentioned compounds, compounds having one ethylenically unsaturated double bond. Examples of such a compound having one ethylenically unsaturated double bond include, for instance, aromatic monovinyl compounds, such as ethylbenzene, styrene, methylstyrene, ethylstyrene, and monobromostyrene, and aliphatic monovinyl compounds, such as methyl (meth)acrylate, stearyl (meth)acrylate, N-methylol (meth)acrylate (meth)acryl amide, and γ-mercaptopropyltrimethoxysilane.

The ratio of mixing the novolac type phenol resin or phenoldicyclopentadiene resin (B) with the compound (C) having at least two ethylenically unsaturated double bonds depends on the kinds of the phenol resin (B) and the

compound (C) used. However, it is normally preferable that the ratio thereof in weight be: (B)/(C) = 70/30 - 40/60. If the (B)/(C) weight ratio is within the above range, the viscosity and the solubility of the resulting resin composition become appropriate, and a cured compound having excellent performance, such as strength, can be obtained in accordance with the embodiment of the present invention.

In the mixture of the above-mentioned conductive material (A), the novolac type phenol resin or phenol dicyclopentadiene resin (B), and the compound having at least two ethylenically unsaturated double bonds (C), the novolac type phenol resin or phenol dicyclopentadiene resin (B), and the compound having at least two ethylenically unsaturated double bonds (C) are added and cross-linked via a molding process.

At this stage, it is possible to add a curing catalyst (D) to the above-mentioned mixture in order to enhance the addition cross-linking reaction. Non-limiting examples of the curing catalysts (D) include, for instance, metallic salts, such as aluminum chloride, and stannous chloride, inorganic acids, such as sulfuric acid, hydrochloric acid, and phosphoric acid, organic sulfonic acids, such as benzene sulfonic acid, and p-toluene sulfonic acid, organic carboxylic acids, such as acetic acid, oxalic acid, and maleic acid, halides of these, and sulfonized compounds derived from novolac type phenol resins. Among these, use of organic sulfonic acids is preferable since they can be uniformly dissolved in a mixture, and the curing rate can be easily adjusted.

The amount of the above curing catalyst (D) used in a reaction is not particularly limited; however, it is generally preferable to use 0.1-5.0% by weight of the catalyst with respect to the above-mentioned mixture.

Non-limiting examples of the curing catalysts (D), other than those mentioned above, include phosphite, such as monophenyl phosphite, esters derived from sulfuric acid and organic sulfonic acid, salts, such as p-toluene methyl sulfonate, and ammonium chloride, and potential catalysts, such as various onium salts, a typical example of which is sulfonium salt, i.e., catalysts which are decomposed under a certain temperature conditions, and generate acidic components. The above-mentioned curing catalyst may be used alone or in a mixture of a curing catalyst with a potential catalyst.

The bipolar plates for a fuel cell according to the embodiment of the present invention may be molded using a mixture of the above conductive material (A), the novolac type phenol resin or phenol dicyclopentadiene resin (B), and the compound having at least two ethylenically unsaturated double bonds (C). In the molded product, the above-mentioned conductive material (A) is dispersed in an addition cross-linking reaction cured compound of the novolac type phenol resin or phenol dicyclopentadiene resin (B), and the compound having at least two ethylenically unsaturated double bonds (C).

The above bipolar plate for a fuel cell may be obtained by mixing the above conductive material (A), the novolac type phenol resin or phenol dicyclopentadiene resin (B), the compound having at least two ethylenically unsaturated double bonds (C), and if necessary the curing catalyst (D), and heat molding the resulting mixture.

Methods for mixing the above conductive material (A) with the novolac type phenol resin or phenol dicyclopentadiene resin (B), and the compound (C) having at least two ethylenically unsaturated double bonds are not particularly limited, and any conventional industrial methods using, for instance, a kneader, agitator, and mixer can be employed. When preparing the mixture, it is possible to make the mixture into the shape of sheet, block, or particles in order to improve the moldability and processability of the mixture or the products manufactured therefrom.

The above mixture can be easily formed into a desired shape by using a mold, etc., having the desired shape of the bipolar plate, and carrying out a process of compression molding, transfer molding, injection molding, and so forth. The molding temperature for carrying out the molding process can be arbitrary selected, however, from the viewpoint of increasing the productivity, it is preferable to use a temperature in the range of 140-190°C.

The shape of the bipolar plate for a fuel cell according to the embodiment of the present invention is not particularly limited, and for instance, one having flow field of gas or liquid at both sides thereof as shown in FIG. 1 can be used.

Also, it is preferable that the bipolar plate for a fuel cell according to the present invention is used for a fuel cell whose operation temperature during power generation is less than 200°C.

Moreover, the bipolar plate for a fuel cell according to the present invention can be used as various types of bipolar plates for a fuel cell, such as a hydrazine type, direct methanol type, alkali type, polymer electrolyte membrane type, phosphoric acid type and so forth.

The fuel cell according to an embodiment of the present invention includes an electrolyte membrane and the above-mentioned bipolar plate, and has a stack structure in which the pair of electrodes are placed on both sides of electrolyte membrane, and the electrolyte membrane is put between a pair of bipolar plates.

The above-mentioned structural unit (cell unit) held by the pair of bipolar plates is generally a basic structure of the fuel cell, and when high output is required, a plurality of the cell units are stacked in series to form a stack structure, and electricity is collected using the current collecting plates disposed at both sides of the stack.

As the above-mentioned electrolyte, substances such as potassium hydroxide are used for the hydrazine type and the alkali type fuel cell, an ion exchange membrane, etc., is used for the direct methanol and the polymer electrolyte membrane type, and phosphoric acid, etc., is used for the phosphoric acid type fuel cell.

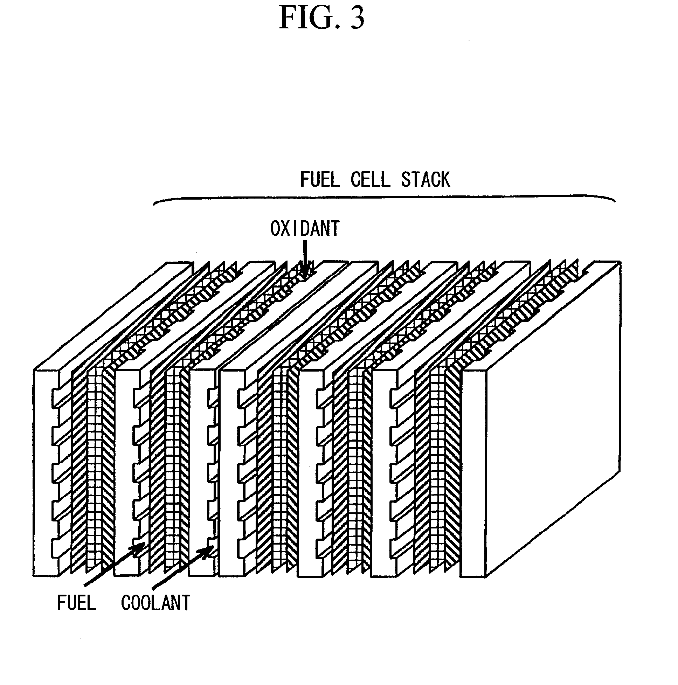

The electrodes include a fuel electrode and an oxidant electrode. Examples of materials used for the electrodes include, for instance, platinum, palladium, silver, and nickel, and if necessary, the electrodes are held by a surface of carbon black or carbon fiber. Examples of fuel for the fuel cell electrode include, for instance, hydrazine, methanol, and hydrogen gas. The hydrogen gas can be obtained from decomposed water, natural gas, and hydrocarbons, such as petroleum, coal, and methanol. When the ion exchange membrane is used as the electrolyte, it is preferable to use a humidified fuel, such as a mixed vapor of hydrogen gas and water.
Examples of the oxidant for the oxidant electrode include, for instance, hydrogen peroxide aqueous solution, air, and oxygen gas. Among these, it is preferable to use air due to the ease of handling. When the ion exchange membrane is used as the electrolyte, it is preferable to use a humidified oxidant.
The bipolar plate according to the embodiment of the present invention may be used as a bipolar plate for the fuel cell of the above-mentioned type. In particular, the bipolar plate of the present invention is suitable for the polymer electrolyte membrane type fuel cell.
Next, the structure of a polymer electrolyte membrane type fuel cell using the bipolar plate for a fuel cell according to the embodiment of the present invention will be explained with reference to FIG. 2.
The polymer electrolyte membrane type fuel cell shown in FIG. 2 includes a cell 1, which is a basic structural unit of the fuel cell, and the cell 1 includes a membrane-electrode assembly 5, and the bipolar plates 6 and 7 sandwich the membrane-electrode assembly 5 from both sides. The membrane-electrode assembly 5 includes a solid polymer electrolyte membrane 2, a fuel electrode 3, and an oxidant electrode 4. Passages 8 are formed on the surface of the bipolar plates 6 and 7 to be suitable for supplying fuel or oxidant in a stable manner. Also, heat may be extracted from the fuel cell by introducing water as a heat exchange medium to the flow fields 8. An example of a cell stack which is formed by stacking a plurality of the cells 1 having the above-mentioned structure in series is shown in FIG. 3 which is within the scope of the present invention.

EXAMPLES

Hereinafter, the present invention will be described in detail using examples and comparative examples. However, the present invention is not, by any means, restricted to those examples. Note that "parts" and "%" shown below are based on weight unless otherwise so indicated.
Methods used for measurements and evaluation standards used in the present invention are as follows.

Appearance of Products:

Bipolar plates for fuel cells obtained in the following examples and comparative examples were directly used as test pieces, and warping, cracking, blister, if any, and the internal states of the test piece were observed visually. As for the warping, cracking, and blister, a test piece having no occurrence thereof was evaluated as "none", and a test piece having even a slight occurrence thereof was evaluated as "present". As for the internal state, the cross-section of the test piece was observed visually, and one having a dense cross-section was evaluated as "good", and one having a cross-section with a number of voids was evaluated as "voids".

Conductivity:

From a flat plate product obtained in the following examples and comparative examples, a test piece having a width of 1 cm, a thickness of 4 mm, and a length of 20 cm was obtained, and the volume resistivity of the test piece was measured in accordance with JIS C2525. A test piece on which cracks were generated, and the volume thereof could not be properly measured was evaluated as "unmeasurable".

Flexural Strength:

The flat plate product obtained in the following examples and comparative examples was directly used as a test piece, and the flexural strength thereof was measured in accordance with JIS K-6911. The evaluation criteria for "unmeasurable" is the same as the above for the conductivity.

Synthetic Example 1:

Phenol (940 g, 10 mol), xylene (470 g), and 80% paraformaldehyde (281.3 g, 7.5 mol) were added to a four neck flask (3L) including an agitator, a condenser, a thermometer, and a dropping funnel, and the mixture was stirred. As a catalyst, zinc acetate hydrate (4.7 g) was added, and the temperature was increased to the reflux temperature. After xylene and water were refluxed and reacted for four hours while removing only an outflowing aqueous layer, the

mixture was distilled and the temperature thereof was increased to 130°C while removing residual water and xylene, which is a solvent, and this temperature was maintained for two hours. Water (940 g) was added to the mixture to decrease the temperature to 80°C, and the agitation was stopped. The aqueous layer was removed, and water was further added to repeat the same procedure in order to wash off and separate the zinc acetate used as the catalyst from the mixture. After this, the resin layer was heated to the temperature of 170°C to remove the remaining water. A part of free phenol was removed at 170°C under a vacuum condition, and then a solid novolac type phenol resin was obtained from the reaction vessel.

After this resin was washed two times using water, the amount of zinc acetate contained in the resin became 0.003 ppm. The resin was heated again to remove the remaining water to obtain a solid novolac type phenol resin. The resin had a softening point measured by ball-and-ring method of 85°C, a number average molecular weight of 852 (measured by GPC), and an O/P ratio of 4.3 (measured by $C^{13}$-NMR). Using divinylbenzen (80% purity, containing ethylstyrene, 100 parts) with respect to the resin (100 parts), the resin was dissolved at 50°C to obtain a resin solution. To the resin solution (100 parts), 30% paratoluene sulfonic acid dissolved into phenol (1.55 parts) were added and uniformly agitated to obtain a phenol resin solution. Hereinafter, the resin solution is referred to as a resin solution A.

Synthetic Example 2:

Phenol (752 g, 8 mol), o -allylphenol (268 g, 2 mol), xylene (470 g), and 80% paraformaldehyde (243.8 g, 6.5 mol) were added to a four neck flask (3L) including an agitator, a condenser, a thermometer, and a dropping funnel, and the mixture was stirred. As a catalyst, zinc acetate 2 hydrate (4.7 g) was added, and the temperature was elevated to the reflux temperature. After xylene and water were refluxed and reacted for four hours while removing only an outflowing aqueous layer, the mixture was distilled and the temperature thereof was increased to 130°C while removing residual water and xylene, which is a solvent, and this temperature was maintained for two hours. Water (940 g) was added to the mixture to decrease the temperature to 80°C, and the agitation was stopped. The aqueous layer was removed, and water was further added to repeat the same procedure in order to wash off and separate the zinc acetate used as the catalyst from the mixture. After this, the resin layer was heated to the temperature of 170°C to remove the remaining water. A part of free phenol was removed at 170°C and under a vacuum condition, and then the product was removed from the reaction vessel to obtain a solid novolac resin. The solid novolac resin had a softening point measured by ball-and-ring method of 65°C, and a number average molecular weight of 723 (measured by GPC). Using the $C^{13}$-NMR, it was measured that the O/P ratio of the resin was 4.9. Using divinylbenzen (80% purity, containing ethylstyrene, 80 parts) with respect to the resin (100 parts), the resin was dissolved at 50°C to obtain a resin solution. To the resin solution (100 parts), xylene sulfonic acid (1 part) was added and uniformly agitated to obtain a resin solution. Hereinafter, the resin solution is referred to as a resin solution B.

Synthetic Example 3:

Special phenol resin DPP-3H (a phenol dicyclopentadiene resin, a product of Nippon Petrochemicals Co., 100 parts) was dissolved in divinylbenzen (80% purity, containing ethylstyrene, 80 parts) at 50°C to obtain a resin solution. To the resin solution (100 parts), xylene sulfonic acid (1 part) was added and uniformly agitated to obtain a resin solution. Hereinafter, the resin solution is referred to as a resin solution C.

Examples 1-10:

The resin solutions A-C prepared in the above Synthetic Examples 1-3 and a conductive material were mixed in proportions shown in the following Table 1. The mixture was filled in a metallic mold having a shape of the bipolar plate for a fuel cell, and also in a mold of flat plate shape, the temperature of which was increased to 150°C, and was molded using a compression molding machine under the conditions of a pressure of 100 kg/$cm^2$ (gauge pressure) and a molding time of 30 minutes to produce a bipolar plate for a fuel cell and a product of flat plate shape (a width of 20 cm, a thickness of 4 mm, and a length of 20 cm). The appearance of the bipolar plate for a fuel cell, and the conductivity and the flexural strength of the flat plate product were evaluated. The results are tabulated in the following Table 2.

Comparative Example 1:

A bipolar plate for a fuel cell and a product of flat plate shape were prepared using the same conditions as in Example 1 except that phenolite J-375 (a general purpose novolac type phenol resin containing hexamethylene tetramine as a curing agent, a product of Dainippon Ink and Chemicals Incorporated) was used instead of the resin solution A. The appearance of the obtained bipolar plate for a fuel cell, and the conductivity and the flexural strength of the flat plate were evaluated in the same manner as in Example 1. The results are tabulated in Table 2.

Comparative Example 2:

A bipolar plate for a fuel cell and a product of flat plate shape were prepared using the same conditions as in Example 1 except that phenolite J-325 (a general purpose resol type phenol resin, a product of Dainippon Ink and Chemicals Incorporated) was used instead of the resin solution A. The appearance of the obtained bipolar plate for a fuel cell, and the conductivity and the flexural strength of the flat plate product were evaluated in the same manner as in Example 1. The results are tabulated in Table 2.

Table 1

| Composition (parts) | Ex.1 | Ex.2 | Ex.3 | Ex.4 | C. Ex.1 | C.Ex.2 |
|---|---|---|---|---|---|---|
| Resin | | | | | | |
| resin sol. A | 20 | 30 | 10 | | | |
| resin sol. B | | | | 20 | | |
| resin sol. C | | | | | | |
| Phenolite J-375 | | | | | 20 | |
| Phenolite J-325 | | | | | | 20 |
| Conductive material | | | | | | |
| Natural graphite | 80 | 70 | 90 | | 80 | |
| Artificial graphite | | | | 80 | | 80 |
| Expanded graphite | | | | | | |
| Copper fiber | | | | | | |
| Zinc powder | | | | | | |
| Titanium boride powder | | | | | | |

Table 1 (continued)

| Composition (parts) | Ex.5 | Ex.6 | Ex.7 | Ex.8 | Ex.9 | Ex.10 |
|---|---|---|---|---|---|---|
| Resin | | | | | | |
| resin sol. A | | | | | | |
| resin sol. B | | | | | | |
| resin sol. C | 20 | 20 | 20 | 20 | 20 | 20 |
| Phenolite J-375 | | | | | | |
| Phenolite J-325 | | | | | | |
| Conductive material | | | | | | |
| Natural graphite | 80 | | | | | |
| Artificial graphite | | 80 | | 70 | 70 | 70 |
| Expanded graphite | | | 80 | | | |
| Copper fiber | | | | 10 | | |
| Zinc powder | | | | | 10 | |
| Titanium boride powder | | | | | | 10 |

Table 2

| | Ex.1 | Ex.2 | Ex.3 | Ex.4 | C. Ex.1 | C.Ex.2 |
|---|---|---|---|---|---|---|
| Appearance of molded product | | | | | | |
| Warping | none | none | none | none | present | present |
| Cracking | none | none | none | none | present | present |
| Blister | none | none | none | none | present | present |
| Internal state | good | good | good | good | voids | voids |
| Conductivity volume resistivity (mΩcm) | 12 | 35 | 5 | 11 | unmeasurable | unmeasurable |
| Flexural strength ($kg/mm^2$) | 5.3 | 7.6 | 2.9 | 5.6 | unmeasurable | unmeasurable |

Table 2 (continued)

| | Ex.5 | Ex.6 | Ex.7 | Ex.8 | Ex.9 | Ex.10 |
|---|---|---|---|---|---|---|
| Appearance of molded product | | | | | | |
| Warping | none | none | none | none | none | None |
| Cracking | none | none | none | none | none | None |
| Blister | none | none | none | none | none | None |
| Internal state | good | good | good | good | good | Good |
| Conductivity volume resistivity (mΩcm) | 8 | 12 | 6 | 3 | 32 | 30 |
| Flexural strength ($kg/mm^2$) | 5.5 | 5.9 | 3.9 | 8.9 | 4.2 | 3.6 |

Having thus described several exemplary embodiments of the invention, it will be apparent that various alterations, modifications, and improvements will readily occur to those skilled in the art. Such alterations, modifications, and improvements, though not expressly described above, are nonetheless intended and implied to be within the spirit and scope of the invention. Accordingly, the invention is limited and defined only by the following claims and equivalents thereto.

**Claims**

**1.** A bipolar plate for a fuel cell, comprising:

a conductive material (A);
a novolac type phenol resin or a phenol dicyclopentadiene resin (B); and
a compound having at least two ethylenically unsaturated double bonds (C), wherein
the conductive material (A) is dispersed in an addition cross-linking reaction cured composition formed by the reaction of the novolac type phenol resin or the phenol dicyclopentadiene resin (B) with the compound having at least two ethylenically unsaturated double bonds (C).

**2.** A bipolar plate for a fuel cell according to claim 1, wherein the novolac type phenol resin has an O/P ratio of 3 or

more, the O/P ratio defined as a ratio of the number of methylene groups bonded to the ortho-positions, with respect to a phenolic hydroxyl group, of aromatic rings contained in one molecule of the novolac type phenol resin to the number of methylene groups bonded to the para-positions.

**3.** A bipolar plate for a fuel cell according to claim 1, wherein the novolac type phenol resin includes an ethylenically unsaturated double bond.

**4.** A bipolar plate for a fuel cell according to claim 1, wherein a number average molecular weight of the novolac type phenol resin is within a range of 200-2,000.

**5.** A bipolar plate for a fuel cell according to claim 1, wherein a number average molecular weight of the phenol dicyclopentadiene resin is within a range of 200-2,000.

**6.** A bipolar plate for a fuel cell according to claim 1, wherein the compound having at least two ethylenically unsaturated double bonds (C) is divinylbenzene.

**7.** A bipolar plate for a fuel cell according to claim 1, wherein the ratio of the novolac type phenol resin or a phenol dicyclopentadiene resin (B) to the compound having at least two ethylenically unsaturated double bonds is within a range of 70:30-40:60.

**8.** A bipolar plate for a fuel cell according to claim 1, wherein the bipolar plate is used for a fuel cell whose operating temperature during power generation is less than 200°C.

**9.** A method for manufacturing a bipolar plate for a fuel cell, comprising the steps of:

mixing a conductive material (A), a novolac type phenol resin or a phenol dicyclopentadiene resin (B), and a compound having at least two ethylenically unsaturated double bonds (C), and
heating and molding a resulting mixture into a shape of a bipolar plate.

**10.** A method for manufacturing a bipolar plate for a fuel cell according to claim 9, wherein the novolac type phenol resin has an O/P ratio of 3 or more, the O/P ratio defined as a ratio of the number of methylene groups bonded to the ortho-positions, with respect to a phenolic hydroxyl group, of aromatic rings contained in one molecule of the novolac type phenol resin to the number of methylene groups bonded to the para-positions.

**11.** A method for manufacturing a bipolar plate for a fuel cell according to claim 9, wherein the compound having at least two ethylenically unsaturated double bonds (C) is divinylbenzene.

**12.** A method for manufacturing a bipolar plate for a fuel cell according to claim 9, wherein the novolac type phenol resin includes an ethylenically unsaturated double bond.

**13.** A method for manufacturing a bipolar plate for a fuel cell, comprising the steps of:

mixing a conductive material (A), a novolac type phenol resin or a phenol dicyclopentadiene resin (B), a compound having at least two ethylenically unsaturated double bonds (C), and a curing catalyst (D), and
heating and molding a resulting mixture into a shape of a bipolar plate.

**14.** A method for manufacturing a bipolar plate for a fuel cell according to claim 13, wherein the novolac type phenol resin has an O/P ratio of 3 or more, the O/P ratio defined as a ratio of the number of methylene groups bonded to the ortho-positions, with respect to a phenolic hydroxyl group, of aromatic rings contained in one molecule of the novolac type phenol resin to the number of methylene groups bonded to the para-positions.

**15.** A method for manufacturing a bipolar plate for a fuel cell according to claim 13, wherein the compound having at least two ethylenically unsaturated double bonds is divinylbenzene.

**16.** A method for manufacturing a bipolar plate for a fuel cell according to claim 13, wherein the novolac type phenol resin includes an ethylenically unsaturated double bond.

**17.** A fuel cell, comprising:

an electrolyte membrane;
a pair of electrodes, and
a bipolar plate for a fuel cell as set forth in any one of claims 1-8, wherein
the pair of electrodes are placed on both sides of the electrolyte membrane, and the electrolyte membrane is put between a pair of the bipolar plates.

FIG. 1

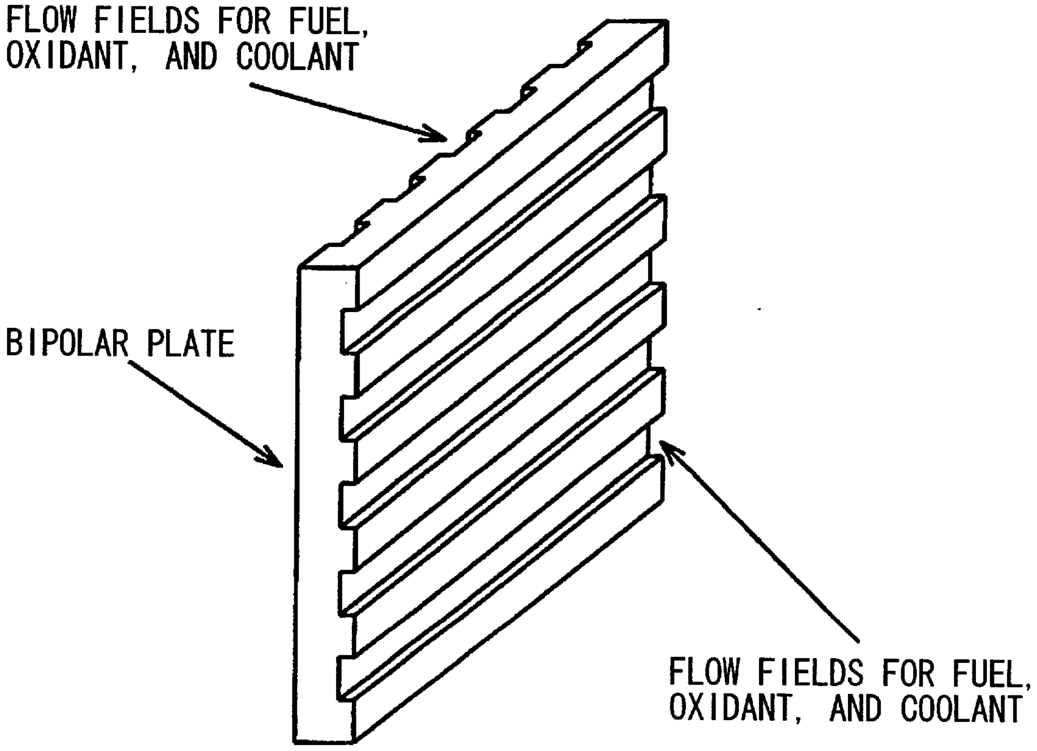
FLOW FIELDS FOR FUEL, OXIDANT, AND COOLANT
BIPOLAR PLATE
FLOW FIELDS FOR FUEL, OXIDANT, AND COOLANT

FIG. 2

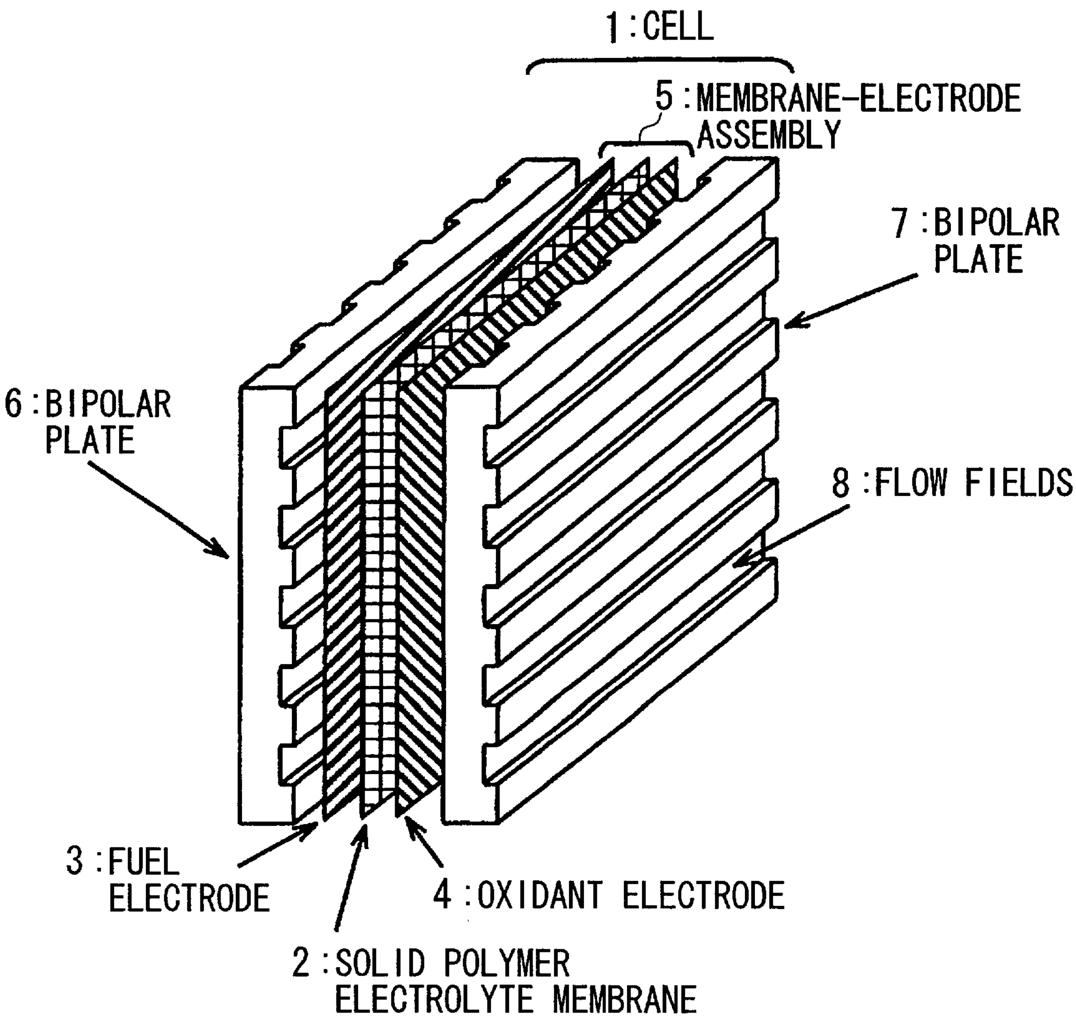
1 : CELL
5 : MEMBRANE-ELECTRODE ASSEMBLY
7 : BIPOLAR PLATE
6 : BIPOLAR PLATE
8 : FLOW FIELDS
3 : FUEL ELECTRODE
4 : OXIDANT ELECTRODE
2 : SOLID POLYMER ELECTROLYTE MEMBRANE

FIG. 3